# EUROPEAN PATENT APPLICATION

(11) **EP 4 641 709 A1**
(43) Date of publication of application: **29.10.2025**
(21) Application number: 23920885.3
(22) Date of filing: 13.12.2023
(51) Int. Cl.: H01M 4/66

(54) **CURRENT COLLECTOR, SECONDARY BATTERY, BATTERY MODULE, BATTERY PACK, AND ELECTRIC DEVICE**

(30) Priority: 07.02.2023 CN 202310100775
(71) Applicant: Contemporary Amperex Technology (Hong Kong) Limited, Hong Kong (HK)
(72) Inventor: LIU, Ben, Ningde, Fujian 352100 (CN); OUYANG, Chuying, Ningde, Fujian 352100 (CN); ZHANG, Xinxin, Ningde, Fujian 352100 (CN); GUO, Bingkun, Ningde, Fujian 352100 (CN); LI, Xiaolong, Ningde, Fujian 352100 (CN); YAO, Shikang, Ningde, Fujian 352100 (CN); CHEN, Shigang, Ningde, Fujian 352100 (CN); CHEN, Xiaoxia, Ningde, Fujian 352100 (CN); LAN, Jiadian, Ningde, Fujian 352100 (CN); LIN, Wenguang, Ningde, Fujian 352100 (CN)
(74) Representative: Gong, Jinping
(86) International application number: PCT/CN2023/138524
(87) International publication number: WO 2024/164696

(57) **Abstract**

This application provides a current collector with a coating, a secondary battery, a battery module, a battery pack, and an electrical device. The coating includes at least a surface modification layer. The coating is formed on at least one side of the current collector. A thickness of the surface modification layer is not greater than 50 nm. The coating formed on at least one side of the current collector can effectively block direct contact between a negative electrode metal and an electrolyte solution constituent, thereby reducing side reactions between the negative electrode metal and the electrolyte solution, significantly reducing gas generated by the battery during a long period of cycling, and improving the cycle performance and safety of the battery.

## Description

### CROSS-REFERENCE TO RELATED APPLICATIONS

This application claims priority to Chinese Patent Application No. 202310100775.5, filed on February 7, 2023 and entitled "CURRENT COLLECTOR, SECONDARY BATTERY, BATTERY MODULE, BATTERY PACK, AND ELECTRICAL DEVICE", which is incorporated herein by reference in its entirety.

### TECHNICAL FIELD

This application relates to the technical field of secondary batteries, and in particular, to a current collector, a secondary battery, a battery module, a battery pack, and an electrical device.

### BACKGROUND

In recent years, secondary batteries have been widely applied in energy storage power systems such as hydro, thermal, wind, and solar power stations, and in many other fields such as electric tools, electric bicycles, electric motorcycles, electric vehicles, military equipment, and aerospace. The universal application of the secondary batteries gives rise to higher requirements on the energy density, cycle performance, and the like of the batteries.

The performance of a secondary battery depends largely on the interfacial chemical properties of the battery. However, during repeated charge-discharge cycles, the interfacial chemical properties deteriorate due to side reactions between an electrode and an electrolyte solution, thereby resulting in a storage performance decline and capacity fading of the secondary battery, and giving rise to severe safety hazards.

### SUMMARY

This application is developed in view of the above subject-matter, and an objective of this application is to provide a current collector with a coating to reduce the gas generated by the battery and improve safety performance of the battery.

According to a first aspect of this application, a current collector with a coating is provided. The coating includes at least a surface modification layer. The coating is formed on at least one side of the current collector. A thickness of the surface modification layer is not greater than 50 nm.

The surface modification layer on one side of the current collector can serve as an artificial solid electrolyte interface to effectively block direct contact between a negative electrode metal and an electrolyte solution constituent during cycling of the battery, thereby reducing production of a large amount of gas caused by side reactions between the negative electrode metal and the electrolyte solution, and improving safety performance of the battery. The surface modification layer disclosed herein is extremely thin, and can maximally ensure efficient transmission of ions and a low interface resistance of the battery while providing interface protection.

In any embodiment, the thickness of the surface modification layer is not greater than 10 nm.

Controlling the thickness of the surface modification layer to be not greater than 10 nm can ensure that the electrolyte solution is sufficiently capable of infiltrating the coating on the surface of the current collector. The surface modification layer ensures good performance of transmitting sodium ions while blocking permeation of solvent molecules, prevents an excessive increase of the interface impedance, and improves the cycle performance of the battery while improving the safety performance of the battery synchronously. In addition, when the thickness of the surface modification layer is not greater than 10 nm, the film resistance of the current collector is prevented from increasing excessively, the current collector is ensured to be of high electronic conductivity, thereby facilitating transmission of electrons between components of the battery and improving the cycle performance of the battery.

In any embodiment, a Young's modulus of the surface modification layer is 0.1 GPa to 100 GPa, and optionally 0.5 GPa to 4 GPa.

Controlling the Young's modulus of the surface modification layer within the range of 0.1 GPa to 100 GPa ensures that the surface modification layer is of high mechanical strength sufficient to withstand the volume expansion of the negative electrode under different loads, thereby significantly reducing the gas generated by the battery during a long period of cycling, and improving the stability and safety of the battery.

Controlling the Young's modulus of the surface modification layer within the range of 0.5 GPa to 4 GPa further improves the cycle performance and safety of the battery.

In any embodiment, the surface modification layer includes one or more of zinc oxide, aluminum oxide, titanium oxide, tin oxide, zirconium oxide, aluminum phosphate, iron phosphate, or lithium phosphate.

With the surface modification layer formed on at least one side of the current collector and containing one or more of zinc oxide, aluminum oxide, titanium oxide, tin oxide, zirconium oxide, aluminum phosphate, iron phosphate, or lithium phosphate, a stable, dense, ionically conductive and electronically insulating solid electrolyte interface (SEI) can be constructed on the surface of the current collector to block the reaction between the electrolyte solution and the deposited sodium metal, thereby significantly reducing the gas generated by the battery during a long period of cycling, and improving the cycle performance and safety of the battery.

In any embodiment, a film resistance of the current collector with the coating is 2×10⁻⁴ to 2×10⁻² Ω, and optionally 3×10⁻⁴ to 5×10⁻³ Ω.

When the film resistance of the current collector with the coating is 2×10⁻⁴ to 2×10⁻² Ω, the current collector is ensured to be of high electronic conductivity, thereby facilitating transmission of electrons between components of the battery. When the film resistance is 3×10⁻⁴ to 5×10⁻³ Ω, it is further ensured that the interface resistance of the battery is low and the cycle performance of the battery is improved.

In any embodiment, the surface modification layer is prepared by atomic layer deposition.

A dense and uniform surface modification layer can be formed on the surface of the current collector by the atomic layer deposition. The surface modification layer is of high ionic conductivity and high mechanical stability, and can serve as an artificial solid electrolyte interface (SEI). When applied to a metal battery, the enhanced SEI can maintain a stable interface and uniform metal deposition during cycling, prevent side reactions between the electrolyte solution and the deposited metal, and improve the cycle stability and safety of the battery.

**In** any embodiment, the surface modification layer is in direct contact with a surface of the current collector.

When the surface modification layer is in direct contact with the surface of the current collector, the surface modification layer can block direct contact between the electrolyte solution and the negative electrode metal, avoid side reactions between the electrolyte solution and the negative electrode metal, and improve the cycle stability and safety of the battery.

In any embodiment, the coating further includes a deposition-inducing layer. The deposition-inducing layer and the surface modification layer are sequentially arranged in a direction directed away from the current collector.

In this application, the deposition-inducing layer induces uniform metal deposition by providing sufficient nucleation sites, thereby suppressing metal dendrites.

The deposition-inducing layer and the deposition-inducing layer are sequentially arranged on the current collector, thereby reducing the nucleation overpotential of metal ions, inducing uniform deposition of metal ions, regulating the deposition of metal ions, suppressing dendrites, and also reducing the contact between metal and electrolyte solution, and in turn, reducing side reactions between the metal and the electrolyte solution, and effectively improving the cycle capacity retention rate of the battery.

In any embodiment, the deposition-inducing layer includes a carbon material.

The deposition-inducing layer containing a carbon material reduces the probability of an excessive current density at a local region through high conductivity, reduces the nucleation overpotential of metal ions, and improves the Coulombic efficiency and capacity retention rate of the battery.

In any embodiment, the current collector includes at least one of metal foil, a metal foam current collector, or a metal mesh current collector.

The above current collectors are of high tensile strength and ductility, and are conducive to the stability and safety of the battery.

A second aspect of this application provides a secondary battery. The secondary battery includes a negative electrode plate. The negative electrode plate includes the current collector disclosed in any one of the above embodiments.

The secondary battery achieves superior cycle performance.

In any embodiment, the secondary battery is a sodium secondary battery.

In any embodiment, the secondary battery is an anode-free sodium secondary battery.

In any embodiment, the secondary battery includes a positive electrode plate, and a thickness of the surface modification layer per unit capacity is 0.1 to 5 nm/mAh.

By controlling the thickness of the surface modification layer per unit capacity within the range of 0.1 to 5 nm/mAh, this application achieves a technical effect that the thickness of the modification layer works in unison with the coating weight of the positive active material to improve the electrochemical performance, cycle life, and safety performance of the battery synchronously.

In any embodiment, the secondary battery further includes an electrolyte solution. The electrolyte solution includes a sodium salt. The sodium salt includes one or more of sodium perchlorate, sodium tetrafluoroborate, sodium hexafluorophosphate, sodium hexafluoroarsenate, sodium trifluoroacetate, sodium tetraphenylborate, sodium trifluoromethanesulfonate, sodium bis(fluorosulfonyl)imide, or sodium bis(trifluoromethanesulfonyl)imide.

In any embodiment, after 50 charge-discharge cycles, based on a mass of the electrolyte solution, an aggregate mass percent of elements Zn, Al, Ti, Sn, Zr, Fe, and Li in the electrolyte solution of the secondary battery is less than 0.0001%.

When the aggregate mass percent of elements Zn, Al, Ti, Sn, Zr, Fe, and Li in the electrolyte solution of the secondary battery is less than 0.0001% after 50 charge-discharge cycles, the surface modification layer can exhibit good electrochemical stability without reacting with the electrolyte solution during the charge-discharge cycles, and can effectively block the reaction between the electrolyte solution and the deposited metal, thereby improving the cycle stability and safety of the battery.

A third aspect of this application provides a battery module. The battery module includes the secondary battery according to the second aspect of this application.

A fourth aspect of this application provides a battery pack. The battery pack includes the secondary battery according to the second aspect of this application or the battery module according to the third aspect of this application.

A fifth aspect of this application provides an electrical device. The electrical device includes at least one of the secondary battery according to the second aspect of this application, the battery module according to the third aspect of this application, or the battery pack according to the fourth aspect of this application.

### BRIEF DESCRIPTION OF DRAWINGS

FIG. 1 is a schematic diagram of a secondary battery according to an embodiment of this application;
FIG. 2 is an exploded view of the secondary battery shown in FIG. 1 according to an embodiment of this application; and
FIG. 3 is a schematic diagram of a battery module according to an embodiment of this application;
FIG. 4 is a schematic diagram of a battery pack according to an embodiment of this application;
FIG. 5 is an exploded view of the battery pack shown in FIG. 4 according to an embodiment of this application; and
FIG. 6 is a schematic diagram of an electrical device that uses a secondary battery as a power supply according to an embodiment of this application.

### List of reference numerals:

1. battery pack; 2. upper box; 3. lower box; 4. battery module; 5. secondary battery; 51. housing; 52. electrode assembly; 53. cover plate.

### DETAILED DESCRIPTION

The following describes and discloses in detail some embodiments of a current collector, a secondary battery, a battery module, a battery pack, and an electrical device according to this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, any embodiments and optional embodiments hereof may be combined with each other to form a new technical solution.

Unless otherwise expressly specified herein, any technical features and optional technical features hereof may be combined with each other to form a new technical solution.

Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified herein, "include" and "comprise" mentioned herein mean open-ended inclusion, or closed-ended inclusion. For example, the terms "include" and "comprise" may mean inclusion of other items that are not recited, or inclusion of only the items recited.

Unless otherwise expressly specified, the term "or" used herein is inclusive. For example, the expression "A or B" means "A alone, B alone, or both A and B". More specifically, all and any of the following conditions satisfy the condition "A or B": A is true (or existent) and B is false (or absent); A is false (or absent) and B is true (or existent); and, both A and B are true (or existent).

A metal battery is a secondary battery that uses a metal material (such as lithium, sodium, magnesium, or potassium) as a negative electrode. The metal material on a negative current collector may be pre-deposited on a surface of the current collector as a negative active material, and may be deposited *in situ* on the surface of the current collector in a charge-and-discharge cycle. In other words, the metal batteries include a sodium battery, a lithium battery, a magnesium battery, a potassium battery, and so on, each containing a negative active material, and also include an anode-free battery. In an anode-free battery, a negative current collector also serves as a negative electrode plate, and the negative electrode plate contains no negative active material. In an initial charge-and-discharge cycle, metal ions are deposited *in situ* on the negative current collector. However, during charge and discharge, the solid electrolyte interface (SEI) on the surface of the metal battery is prone to dissolve. The metal directly contacts the electrolyte solution and undergoes severe side reactions, thereby producing a large amount of gas, resulting in a decline in the storage performance, capacity fading, and reduced cycle stability of the metal battery, and posing drastic safety hazards.

### [Current collector]

In view of the above situation, this application discloses a current collector with a coating. The coating includes at least a surface modification layer. The coating is located on at least one side of the current collector. A thickness of the surface modification layer is not greater than 50 nm.

In some embodiments, the coating is not in direct contact with the current collector. The coating and the current collector are interspaced with another layer including but not limited to a negative active material layer as an example.

In some embodiments, the current collector with the coating serves as a negative current collector of a secondary battery.

In some embodiments, the coating is located on the surface of the current collector, and the current collector with the coating directly serves as a negative current collector of an anode-free secondary battery.

In some embodiments, the term "surface modification layer" means a layer formed by a physical or chemical method and configured to modify the surface status of the current collector.

In some embodiments, the coating further includes any layer other than the surface modification layer, including but not limited to, a deposition-inducing layer. The synergistic effect between different layers further improves the cycle stability of the secondary battery, especially the anode-free secondary battery.

In some embodiments, the thickness of the surface modification layer is optionally not greater than 50 nm, not greater than 40 nm, not greater than 35 nm, not greater than 30 nm, not greater than 25 nm, not greater than 20 nm, not greater than 15 nm, or not greater than 10 nm.

The surface modification layer on one side of the current collector can serve as an artificial solid electrolyte interface to effectively block direct contact between a negative electrode metal and an electrolyte solution constituent during cycling of the battery, thereby reducing production of a large amount of gas caused by side reactions between the negative electrode metal and the electrolyte solution, and improving safety performance of the battery. The surface modification layer disclosed herein is extremely thin, and can maximally ensure efficient transmission of ions and a low interface resistance of the battery while providing interface protection.

In some embodiments, the thickness of the surface modification layer is not greater than 10 nm.

Controlling the thickness of the surface modification layer to be not greater than 10 nm can ensure that the electrolyte solution is sufficiently capable of infiltrating the coating on the surface of the current collector. The surface modification layer ensures good performance of transmitting sodium ions while blocking permeation of solvent molecules, prevents an excessive increase of the interface impedance, and improves the cycle performance of the battery while improving the safety performance of the battery synchronously. In addition, when the thickness of the surface modification layer is not greater than 10 nm, the film resistance of the current collector is prevented from increasing excessively, the current collector is ensured to be of high electronic conductivity, thereby facilitating transmission of electrons between components of the battery and improving the cycle performance of the battery.

In some embodiments, a Young's modulus of the surface modification layer is 0.1 GPa to 100 GPa, and optionally 0.5 GPa to 4 GPa.

In this application, the term "Young's modulus" is a physical quantity that represents the ability of a material to resist elastic deformation. From a macroscopic perspective, the Young's modulus is a measure of the ability of an object to resist elastic deformation. From a microscopic perspective, the Young's modulus reflects the bond strength between atoms, ions, or molecules. The Young's modulus may be measured by any method well-known in the art. For example, the Young's modulus of the surface modification layer is measured by using Bruker's Dimension Icon. The Dimension Icon is an atomic force microscope (AFM) that works in plurality of modes such as Quantitative NanoMechanics (QNM) mode. The Young's modulus is obtained by selecting a PeakForce QNM mode, scanning the surface modification layer by using an AFM probe that possesses a force constant of 80 N/m, and fitting a retract curve by using a Derjaguin-Muller-Toporov (DMT) model.

In some embodiments, the Young's modulus of the surface modification layer is optionally 0.1 GPa, 0.2 GPa, 0.3 GPa, 0.4 GPa, 0.5 GPa, 0.6 GPa, 0.7 GPa, 0.8 GPa, 0.9 GPa, 1 GPa, 1.5 GPa, 2 GPa, 2.5 GPa, 3 GPa, 3.5 GPa, 4 GPa, 4.5 GPa, 5 GPa, 5.5 GPa, 6 GPa, 6.5 GPa, 7 GPa, 7.5 GPa, 8 GPa, 8.5 GPa, 9 GPa, 9.5 GPa, 10 GPa, 15 GPa, 20 GPa, 25 GPa, 30 GPa, 35 GPa, 40 GPa, 45 GPa, 50 GPa, 55 GPa, 60 GPa, 65 GPa, 70 GPa, 75 GPa, 80 GPa, 85 GPa, 90 GPa, 95 GPa, or 100 GPa.

Controlling the Young's modulus of the surface modification layer within the range of 0.1 GPa to 100 GPa ensures that the surface modification layer is of high mechanical strength sufficient to withstand the volume expansion of the negative electrode under different loads, thereby reducing the rupture of the surface modification layer caused by the volume change on the negative electrode side during charge and discharge, and improving the stability and safety of the battery during high-temperature cycling and long-period cycling.

Controlling the Young's modulus of the surface modification layer within the range of 0.5 GPa to 4 GPa further improves the cycle performance and safety of the battery.

In some embodiments, the surface modification layer includes one or more of zinc oxide (ZnO), aluminum oxide (Al₂O₃), titanium oxide (TiO₂), tin oxide (SnO₂), zirconium oxide (ZrO₂), aluminum phosphate (AlPO₄), iron phosphate (FePO₄), or lithium phosphate (Li₃PO₄).

With the surface modification layer formed on at least one side of the current collector and containing one or more of zinc oxide, aluminum oxide, titanium oxide, tin oxide, zirconium oxide, aluminum phosphate, iron phosphate, or lithium phosphate, a stable, dense, ionically conductive and electronically insulating solid electrolyte interface (SEI) can be constructed on the surface of the current collector to block the reaction between the electrolyte solution and the negative active material such as sodium metal, thereby significantly reducing the gas generated by the battery during a long period of cycling, and improving the cycle stability and safety of the battery.

In some embodiments, the film resistance of the current collector after deposition of the coating is not greater than 10 times the resistance of the current collector before the deposition of the coating.

In some embodiments, the film resistance of the current collector after deposition of the coating is optionally not greater than 10, 8, 6, 5, 4, 3, 2, or 1.5 times the resistance of the current collector before the deposition of the coating.

In some embodiments, the film resistance of the current collector with the coating is 2×10⁻⁴ to 2×10⁻² Ω, and optionally 3×10⁻⁴ to 5×10⁻³ Ω.

The film resistance may be measured by any well-known method, including but not limited to a one-point probe method, a four-point probe method, a DC two-point probe method, in which an area of contact between a probe and the current collector with the coating is set to 49π mm². An exemplary method for measuring the film resistance R of an electrode plate includes: gripping an upper side and a lower side of the current collector with the coating by using two conductive terminals of a Hioki BT23562 internal resistance tester respectively, and applying a pressure to fix the electrode plate, in which a diameter of the conductive terminals is 14 mm, and the applied pressure is 15 MPa to 27 MPa, so that the film resistance of the current collector with the coating is measured.

In some embodiments, the film resistance of the current collector with the coating is optionally 2×10⁻⁴ Ω, 3×10⁻⁴ Ω, 4×10⁻⁴ Ω, 5×10⁻⁴ Ω, 6×10⁻⁴ Ω, 7×10⁻⁴ Ω, 8×10⁻⁴ Ω, 9×10⁻⁴ Ω, 1×10⁻³ Ω, 2×10⁻³ Ω, 3×10⁻³ Ω, 4×10⁻³ Ω, 5×10⁻³ Ω, 6×10⁻³ Ω, 7×10⁻³ Ω, 8×10⁻³ Ω, 9×10⁻³ Ω, 1×10⁻² Ω, or 2×10⁻² Ω.

When the film resistance of the current collector with the coating is 3×10⁻⁵ to 2×10⁻² Ω, the current collector is ensured to be of high electronic conductivity, thereby facilitating transmission of electrons between components of the battery, improving the C-rate performance of the battery, enhancing the electrochemical performance of the battery, and prolonging the service life of the battery.

In some embodiments, the surface modification layer is prepared by atomic layer deposition.

The atomic layer deposition is a method for depositing a substance on the surface of a substrate layer by layer in the form of a single atomic film. The atomic layer deposition allows only one layer of atoms to be deposited per reaction. Therefore, the surface modification layer prepared by the atomic layer deposition is extremely thin, and can maximally ensure a high conductivity of the current collector and a low interface resistance of the battery while providing interface protection. Moreover, the preparation method by way of atomic layer deposition is of high precision and can form a dense and uniform surface modification layer on the surface of the current collector. The surface modification layer is of high ionic conductivity and high mechanical stability, and can serve as an artificial solid electrolyte interface (SEI). When applied to a metal battery, the enhanced SEI can maintain a stable interface and uniform metal deposition during cycling, prevent side reactions between the electrolyte solution and the deposited metal, and improve the safety of the battery.

In some embodiments, the surface modification layer is in direct contact with a surface of the current collector.

When the surface modification layer is directly deposited on the current collector, the interaction force between the surface modification layer and the current collector is strong, and the surface modification layer is not prone to peel off during cycling.

In some embodiments, the coating further includes a deposition-inducing layer. The deposition-inducing layer and the surface modification layer are sequentially arranged in a direction directed away from the current collector.

In this application, the deposition-inducing layer induces uniform metal deposition by providing sufficient nucleation sites, thereby suppressing metal dendrites.

As used herein, the term "nucleation site" means a location at which a metal atom is deposited after being formed by electrons gained by the metal ions from a negative electrode.

The deposition-inducing layer and the deposition-inducing layer are sequentially arranged on the current collector, thereby reducing the nucleation overpotential of metal ions, inducing uniform deposition of metal ions, regulating the deposition of metal ions, suppressing dendrites, and also reducing the contact between metal and electrolyte solution, and in turn, reducing side reactions between the metal and the electrolyte solution, and effectively improving the cycle capacity retention rate of the battery.

As used herein, the term "nucleation overpotential" means an additional potential required for nucleation of a metal ion, or a potential deviation of the metal ion from a potential at which the metal ion is deposited or stripped. This value is derived from a critical nucleation radius of the metal ion.

In some embodiments, the deposition-inducing layer includes a carbon material.

The deposition-inducing layer containing a conductive material reduces the probability of an excessive current density at a local region through high conductivity, reduces the nucleation overpotential of metal ions, and improves the Coulombic efficiency and capacity retention rate of the battery.

As used herein, the term "carbon material" means a material containing carbon. As an example, the carbon material includes but is not limited to Super P, carbon nanotubes, hard carbon, two-dimensional graphene, or graphene quantum dots.

As used herein, the term "Super P" means a grape-like carbon black formed by aggregating particles.

As used herein, the term "carbon nanotube" means a seamless hollow cylinder formed by rolling up one or more layers of graphene, with a tube diameter less than 100 nm and a tube length greater than 100 nm. As an example, the carbon nanotubes include, but are not limited to, single-walled carbon nanotubes and/or multi-walled carbon nanotubes.

As used herein, the term "hard carbon" means carbon that is difficult to graphitize.

In some embodiments, two-dimensional graphene means sheet-structured graphene that is on a nanoscale in the thickness direction (thinner than 100 nm) and more than 100 nm in dimensions in other directions.

As used herein, the term "graphene quantum dots" means graphene nanoparticles with a size less than 100 nm in all dimensions.

In some embodiments, the areal density of the deposition-inducing layer is 2 g/m² to 50 g/m².

In some embodiments, the thickness of the deposition-inducing layer is 1 µm to 100 µm.

The deposition-inducing layer falling within the above parameter ranges can effectively guide the deposition of sodium ions, reduce the generation of sodium dendrites on the negative electrode, improve the uniformity of sodium metal deposition, and further improve the cycle performance of the anode-free secondary battery. Moreover, the deposition-inducing layer with an appropriate areal density and an appropriate thickness can truly serve the "anode-free" function, and improve the energy density and safety performance of the battery.

In some embodiments, the current collector includes at least one of metal foil, a metal foam current collector, or a metal mesh current collector.

In some embodiments, the metal foil is optionally copper foil, aluminum foil, stainless steel foil, iron foil, zinc foil, or titanium foil; and the metal foam current collector is optionally copper foam, aluminum foam, zinc foam, or the like. The metal mesh current collector is optionally a copper mesh or an aluminum mesh.

The above current collectors are of high tensile strength and ductility, and are conducive to the stability and safety of the battery.

### [Secondary battery]

An embodiment of this application provides a secondary battery. The secondary battery includes a negative electrode plate. The negative electrode plate includes the current collector disclosed in some embodiments.

In some embodiments, the secondary battery is a sodium secondary battery.

In some embodiments, the secondary battery is an anode-free sodium secondary battery. The anode-free sodium metal battery uses no negative active material, but uses a negative current collector as a negative electrode. Sodium ions are deposited on the negative electrode in an initial charging process, and then return to the positive electrode during discharge, thereby implementing a charge-and-discharge cycle. By employing a negative current collector but without a negative electrode material, the anode-free sodium secondary battery can effectively overcome the defects of the sodium metal battery and achieve a higher energy density than a metallic sodium negative electrode. Moreover, the anode-free sodium secondary battery does not require pre-deposition of a negative active material. Therefore, compared to other types of sodium secondary batteries, the anode-free sodium secondary battery is highly efficient in molding and highly cost-effective in manufacturing while maintaining high electrochemical performance.

In some embodiments, a cell balance (CB) value of the anode-free sodium secondary battery is less than or equal to 0.1. The CB value is a ratio of the capacity per unit area of the negative electrode plate to the capacity per unit area of the positive electrode plate in the sodium secondary battery. The anode-free sodium secondary battery contains no negative active material. Therefore, the capacity of the negative electrode plate per unit area is relatively low, and the CB value of the anode-free sodium secondary battery is less than or equal to 0.1.

With a surface modification layer deposited on the surface of the negative current collector of the anode-free sodium secondary battery, the reaction between the electrolyte solution and the sodium metal deposited on the negative electrode during cycling of the battery can be blocked, thereby improving the interface stability. In addition, the surface modification layer is of high mechanical strength sufficient to withstand the volume expansion of the negative electrode under different loads, thereby significantly reducing the gas generated by the battery during a long period of cycling, and improving the safety of the battery.

In some embodiments, the secondary battery includes a positive electrode plate.

In some embodiments, the thickness of the surface modification layer per unit capacity is 0.1 to 5 nm/mAh.

Thickness of surface modification layer per unit capacity = thickness of surface modification layer/(theoretical gravimetric capacity of positive active material × mass of positive active material).

In some embodiments, the thickness of the surface modification layer per unit capacity is optionally 0.2 nm/mAh, 0.3 nm/mAh, 0.4 nm/mAh, 0.5 nm/mAh, 0.6 nm/mAh, 0.7 nm/mAh, 0.8 nm/mAh, 0.9 nm/mAh, 1 nm/mAh, 1.1 nm/mAh, 1.2 nm/mAh, 1.3 nm/mAh, 1.4 nm/mAh, 1.5 nm/mAh, 1.6 nm/mAh, 1.7 nm/mAh, 1.8 nm/mAh, 1.9 nm/mAh, 2.0 nm/mAh, 2.1 nm/mAh, 2.2 nm/mAh, 2.3 nm/mAh, 2.4 nm/mAh, 2.5 nm/mAh, 2.6 nm/mAh, 2.7 nm/mAh, 2.8 nm/mAh, 2.9 nm/mAh, 3 nm/mAh, 3.2 nm/mAh, 3.4 nm/mAh, 3.6 nm/mAh, 3.8 nm/mAh, 4.0 nm/mAh, 4.2 nm/mAh, 4.4 nm/mAh, 4.6 nm/mAh, 4.8 nm/mAh, or 5.0 nm/mAh.

By controlling the thickness of the surface modification layer per unit capacity within the range of 0.1 to 5 nm/mAh, this application achieves a technical effect that the thickness of the modification layer works in unison with the coating weight of the positive active material to improve the electrochemical performance, cycle life, and safety performance of the battery synchronously.

In some embodiments, the positive electrode plate further includes a positive active material layer formed on at least a part of surfaces of the positive current collector. The positive active material layer includes a positive active material. The positive active material may include one or more of a Prussian blue compound, a polyanionic compound, or a layered transition metal oxide.

The transition metal in the layered transition metal oxide may be at least one of Mn, Fe, Ni, Co, Cr, Cu, Ti, Zn, V, Zr, or Ce. Optionally, the layered transition metal oxide is, for example, NaₓMO₂, where M is one or more of Ti, V, Mn, Co, Ni, Fe, Cr, or Cu, and 0 < x ≤ 1.

The polyanionic compound may be a type of compound containing a metal ion, a transition metal ion, and a tetrahedral (YO₄)ⁿ⁻ anion unit. The metal ion is optionally one of a sodium ion, a lithium ion, a potassium ion, or a zinc ion. The transition metal is optionally at least one of Mn, Fe, Ni, Co, Cr, Cu, Ti, Zn, V, Zr, or Ce. Y is optionally at least one of P, S, or Si; and n denotes a valence of (YO₄)ⁿ⁻.

The Prussian blue compound may be a compound containing a sodium ion, a transition metal ion, or a cyano ion (CN⁻). The transition metal may be at least one of Mn, Fe, Ni, Co, Cr, Cu, Ti, Zn, V, Zr, or Ce. For example, the Prussian blue compound is NaₐMe_{b}Me'_{c}(CN)₆, where Me and Me' each are independently at least one of Ni, Cu, Fe, Mn, Co, or Zn, 0 < a ≤ 2, 0 < b < 1, and 0 < c < 1.

The positive active material layer may further include a conductive agent to improve the conductivity of the positive electrode. The conductive agent is optionally one or more of Super P, acetylene black, carbon black, Ketjen black, carbon dots, carbon nanotubes, graphite, graphene, or carbon nanofibers.

The positive active material layer may include a binder to firmly bind the positive active material and optionally the conductive agent onto the positive current collector. The binder is optionally at least one of polyvinylidene difluoride (PVDF), polytetrafluoroethylene (PTFE), polyacrylic acid (PAA), polyvinyl alcohol (PVA), poly(ethylene-co-vinyl acetate) (EVA), styrenebutadiene rubber (SBR), carboxymethylcellulose (CMC), sodium alginate (SA), polymethacrylic acid (PMA), or carboxymethyl chitosan (CMCS).

In some embodiments, a surface of particles of the positive active material is overlaid with a coating layer. The coating layer includes one or more of a carbon material, polyaniline (PANI), polypyrrole (PPy), poly(3,4-ethylenedioxythiophene) (PEDOT), aluminum oxide (Al₂O₃), zinc oxide (ZnO), titanium oxide (TiO₂), zirconium oxide (ZrO₂), magnesium oxide (MgO), silicon oxide (SiO₂), lanthanum oxide (La₂O₃), sodium fluoride (NaF), lithium fluoride (LiF), or aluminum fluoride (AlF₃); and the carbon material includes one or more of amorphous carbon, graphite, or graphene.

The coating layer can effectively improve the stability of the positive active material, reduce metal dissolution and particle fragmentation of the positive active material during cycling, and effectively improve the cycle performance and storage stability of the battery.

In some embodiments, the thickness of the coating layer is 2 nm to 1000 nm, and optionally 10 nm to 100 nm.

In some embodiments, the thickness of the coating layer is optionally 2 nm, 5 nm, 10 nm, 20 nm, 30 nm, 40 nm, 50 nm, 60 nm, 70 nm, 80 nm, 90 nm, 100 nm, 150 nm, 200 nm, 250 nm, 300 nm, 350 nm, 400 nm, 450 nm, or 500 nm.

The coating layer of an appropriate thickness can exert an effective improvement effect and avoid an excessive thickness of the coating layer that leads to an excessive film resistance of the positive electrode and a decline in battery performance.

In some embodiments, the positive electrode plate may be prepared according to the following method: dispersing the ingredients of the positive electrode plate such as the positive active material, the conductive agent, the binder, and any other ingredients into a solvent (such as N-methyl-pyrrolidone) to form a positive electrode slurry, coating a positive current collector with the positive electrode slurry, and performing steps such as drying and cold pressing to obtain the positive electrode plate.

In some embodiments, the secondary battery further includes an electrolyte.

The electrolyte serves to conduct ions between the positive electrode plate and the negative electrode plate. The type of the electrolyte is not particularly limited in this application, and may be selected as required. For example, the electrolyte may be in a liquid state or gel state, or all solid state.

In some embodiments, the electrolyte is an electrolyte solution. The electrolyte solution includes a sodium salt and a solvent.

In some embodiments, the sodium salt includes one or more of sodium perchlorate (NaClO₄), sodium tetrafluoroborate (NaBF₄), sodium hexafluorophosphate (NaPF₆), sodium hexafluoroarsenate (NaAsF₆), sodium trifluoroacetate (CF₃COONa), sodium tetraphenylborate (NaB(C₆H₅)₄), sodium trifluoromethanesulfonate (NaSO₃CF₃), sodium bis(fluorosulfonyl)imide (Na[(FSO₂)₂N]), or sodium bis(trifluoromethanesulfonyl)imide (Na[(CF₃SO₂)₂N]).

In some embodiments, the solvent includes one or more of monoglyme (DME), diglyme (DEGDME), triglyme (TRGDME), tetraglyme (TEGDME), 1,3-dioxolane (DOL), ethylene glycol diethyl ether (DEE), diethylene glycol diethyl ether (DEGDEE), diisopropyl ether (DIE), dibutyl ether (DBE), diethylene glycol dibutyl ether (DEGDBE), 1,4-dimethoxybutane (DMB), 1,4-diethoxybutane (DEB), tetrahydrofuran (THF), 15-crown ether-5 (15-crown-5), 12-crown ether-4 (12-crown-4), or 18-crown ether-6.

The molecules of the ether solvent can build a stable electrode/electrolyte interface on the surface of the negative electrode, form a stable solid electrolyte interface (SEI) film, alleviate electrochemical polarization, and enhance the Coulombic efficiency and cycle capacity retention rate of the battery.

Using an anode-free sodium secondary battery as an example, the ether solvent is highly compatible with a sodium metal negative electrode, and can effectively passivate the sodium metal, form a thin, uniform and dense SEI film on the surface of sodium metal, further prevent the formation of sodium dendrites, and prevent the SEI film from thickening caused by growth and evolution of the sodium dendrites and from affecting ion conduction.

In some embodiments, the electrolyte solution further optionally includes an additive. For example, the additive may include a negative electrode film-forming additive or a positive electrode film-forming additive. The additive may further include an additive capable of improving specified performance of the battery, for example, an additive for improving overcharge performance of the battery, or an additive for improving high- or low-temperature performance of the battery.

In some embodiments, after 50 charge-discharge cycles, based on a mass of the electrolyte solution, a mass percent of elements Zn, Al, Ti, Sn, Zr, Fe, and Li in the electrolyte solution is less than 0.0001%.

The surface modification layer exhibits good mechanical stability and electrochemical stability, and keeps stable during charge-discharge cycles, and can effectively block the reaction between the electrolyte solution and the deposited metal, thereby improving the cycle stability and safety of the battery.

In some embodiments, the secondary battery further includes a separator. The type of the separator is not particularly limited in this application, and may be any well-known porous separator that is highly stable both chemically and mechanically.

In some embodiments, the material of the separator may be at least one selected from polyethylene, polypropylene, polyvinylidene fluoride, aramid fiber, polyethylene terephthalate, polytetrafluoroethylene, polyacrylonitrile, polyimide, polyamide, polyester, or natural fiber. The separator may be a single-layer film or a multilayer composite film, without being particularly limited. When the separator is a multilayer composite film, materials in different layers may be identical or different, without being particularly limited.

In some embodiments, the positive electrode plate, the negative electrode plate, and the separator may be made into an electrode assembly by winding or stacking.

In some embodiments, the secondary battery may include an outer package. The outer package may be configured to package the electrode assembly and the electrolyte.

In some embodiments, the outer package of the secondary battery may be a hard shell such as a hard plastic shell, an aluminum shell, a steel shell, or the like. Alternatively, the outer package of the secondary battery may be a soft package such as a pouch-type soft package. The soft package may be made of plastic such as polypropylene, polybutylene terephthalate, or polybutylene succinate.

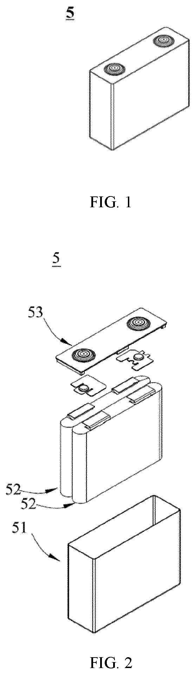

The shape of the secondary battery is not particularly limited in this application, and may be cylindrical, prismatic or any other shape. FIG. 1 shows a prismatic secondary battery 5 as an example.

In some embodiments, referring to FIG. 2, the outer package may include a housing 51 and a cover plate 53. The housing 51 may include a bottom plate and a side plate connected to the bottom plate. The bottom plate and the side plate close in to form an accommodation cavity. An opening that communicates with the accommodation cavity is made on the housing 51. The cover plate 53 can fit and cover the opening to close the accommodation cavity. The positive electrode plate, the negative electrode plate, and the separator may be made into the electrode assembly 52 by winding or stacking. The electrode assembly 52 is packaged in the accommodation cavity. The electrolyte solution infiltrates in the electrode assembly 52. The number of electrode assemblies 52 in a secondary battery 5 may be one or more, and may be selected by a person skilled in the art as actually required.

In some embodiments, secondary batteries may be assembled to form a battery module. The battery module may include one or more secondary batteries, and the specific number of secondary batteries in a battery module may be selected by a person skilled in the art depending on practical applications and capacity of the battery module.

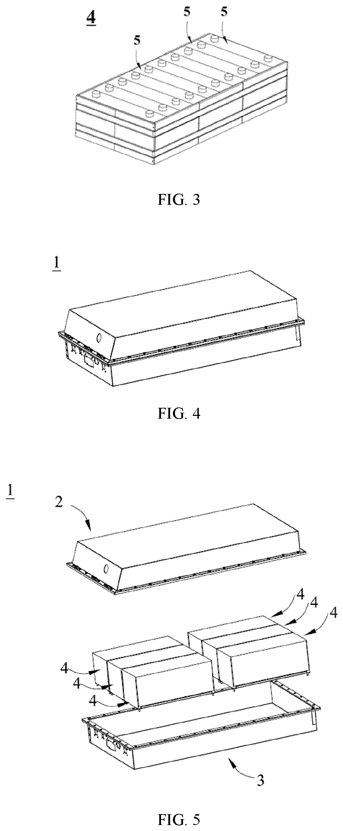

FIG. 3 shows a battery module 4 as an example. Referring to FIG. 3, in the battery module 4, a plurality of secondary batteries 5 may be arranged sequentially along a length direction of the battery module 4. Alternatively, the secondary batteries may be arranged in any other manner. Further, the plurality of secondary batteries 5 may be fixed by a fastener.

Optionally, the battery module 4 may further include a shell that provides an accommodation space. The plurality of secondary batteries 5 are accommodated in the accommodation space.

In some embodiments, the battery module may be assembled to form a battery pack. The battery pack may include one or more battery modules, and the specific number of battery modules in a battery pack may be selected by a person skilled in the art depending on practical applications and capacity of the battery pack.

FIG. 4 and FIG. 5 show a battery pack 1 as an example. Referring to FIG. 4 and FIG. 5, the battery pack 1 may include a battery box and a plurality of battery modules 4 disposed in the battery box. The battery box includes an upper box 2 and a lower box 3. The upper box 2 fits the lower box 3 to form a closed space for accommodating the battery modules 4. The plurality of battery modules 4 may be arranged in the battery box in any manner.

Further, this application provides an electrical device. The electrical device includes at least one of the secondary battery, the battery module, or the battery pack according to this application. The secondary battery, the battery module, or the battery pack may be used as a power supply of the electrical device, or used as an energy storage unit of the electrical device. The electrical device may include, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The secondary battery, the battery module, or the battery pack may be selected for use in the electrical device according to practical requirements of the electrical device.

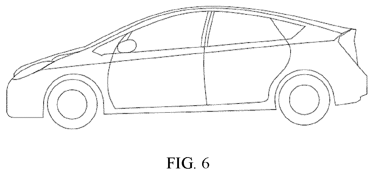

FIG. 6 shows an electrical device as an example. The electrical device may be a battery electric vehicle, a hybrid electric vehicle, a plug-in hybrid electric vehicle, or the like. The electrical device may adopt a battery pack or a battery module in order to meet the requirements of the electrical device on a high power and a high energy density of the secondary battery.

In another example, the device may be a mobile phone, a tablet computer, a notebook computer, or the like. The device is generally required to be thin and light, and may have a secondary battery as a power supply.

### Embodiments

The following describes some embodiments of this application. The embodiments described below are illustrative, and are merely intended to construe this application but not to limit this application. Unless techniques or conditions are otherwise expressly specified in an embodiment hereof, the techniques or conditions described in the literature in this field or in an instruction manual of the product are applicable in the embodiment. A reagent or instrument used herein without specifying a manufacturer is a conventional product that is commercially available in the market. In the following embodiments, an example is given in which the secondary battery is a sodium-ion battery, but this application is not limited to the example.

### I. Preparation methods

### Embodiment 1

### 1) Preparing a negative current collector

The atomic layer deposition and modification process is performed by an atomic layer deposition (ALD) system by using trimethylaluminum (TMA) as a precursor, in which the reactant is water, the carrier gas is nitrogen, the reaction chamber temperature is 150 °C, and the pressure is 0.2 torr. Under these conditions, the atomic layer deposition rate is calibrated to 1.4 Å/cycle. The aluminum oxide layer is deposited on the surface of the copper foil to modify the surface by controlling the number of cycles.

### 2) Preparing a positive electrode plate

Mixing Na₃V₂(PO₄)₃ as a positive active material, polyvinylidene difluoride (PVDF) as a binder, and conductive carbon black (Super P) as a conductive agent at a mass ratio of 96%: 2%: 2% in an N-methyl-pyrrolidone (NMP) solvent, stirring well to obtain a positive electrode slurry. Applying, by using an extrusion coating machine, the positive electrode slurry onto the surface of an aluminum foil at a concentration that meets the requirement on the mass of the positive active material per unit area, and then oven-drying the slurry. Cold-pressing the coated electrode plate until a compaction density of 2.5 g/cm³ by using a cold-pressing machine, so as to obtain a finished positive electrode plate.

### 3) Separator

Using a polyethylene (PE) film as a separator.

### 4) Preparing an electrolyte solution

Dissolving a sodium salt sodium hexafluorophosphate (NaPF₆) in an organic solvent monoglyme (DME) in an argon atmosphere glovebox (in which the content of H₂O is less than 0.1 ppm, and the content of O₂ is less than 0.1 ppm), and stirring well to obtain an electrolyte solution in which the concentration of NaPF₆ is 1 mol/L.

### 5) Preparing an anode-free full-cell

Stacking the positive electrode plate, the separator, and the negative current collector sequentially in such a way that the separator is located between the positive current collector and the negative current collector to serve a function of separation, and then winding the stacked structure to obtain a bare cell. Welding tabs onto the bare cell, and putting the bare cell into an aluminum shell. Dehydrating the cell by drying the cell at 80 °C, and then injecting an electrolyte solution into the aluminum shell package and sealing the package to obtain an uncharged battery. Performing steps such as static standing, hot- and cold-pressing, chemical formation, shaping, and capacity test on the uncharged cell to obtain an anode-free sodium secondary battery product in Embodiment 1.

The preparation methods in other embodiments and comparative embodiments are similar to the preparation method in Embodiment 1 except some adjusted parameters, as detailed in Table 1.

In Embodiment 5, carbon nanotubes and sodium alginate are added into water, and stirred to form a homogeneous slurry. The slurry is applied onto a negative current collector and oven-dried, and then subjected to atomic layer deposition to form an atomic layer, where the areal density of the carbon nanotube undercoat is 20 g/m².

In Comparative Embodiments 1 to 4, the negative electrode plate includes no surface modification layer.

### II. Performance test

### 1. Current collector performance test

### 1) Measuring the thickness of the atomic deposition layer.

Using a fully automated ellipsometer (UVISEL2, HORIBA) to measure the thickness of a film grown on a silicon wafer substrate under different conditions. Determining the growth rate of the specimen based on the film thickness and the number of deposition cycles, and calculating the thickness of the modification layer based on the number of cycles.

### 2) Measuring the Young's modulus of the atomic deposition layer

The Young's modulus of the atomic deposition layer is measured by using Bruker's Dimension Icon. The Dimension Icon is an atomic force microscope (AFM) that works in plurality of modes such as Quantitative NanoMechanics (QNM) mode. The Young's modulus is obtained by selecting a PeakForce QNM mode, scanning the sample by using an AFM probe that possesses a force constant of 80 N/m, and fitting a retract curve by using a Derjaguin-Muller-Toporov (DMT) model.

### 3) Measuring the film resistance of the current collector

Gripping an upper side and a lower side of the current collector with the coating by using two conductive terminals of a Hioki BT23562 internal resistance tester respectively, and applying a pressure to fix the electrode plate, in which a diameter of the conductive terminals is 14 mm, and the applied pressure is 15 MPa to 27 MPa, so that the film resistance of the current collector with the coating is measured. Measuring the film resistance R of the electrode plate for 5 times, and averaging out the measured values.

### 2. Testing the battery performance

1) Charging and discharging a battery for 50 cycles, and taking out the electrolyte solution in the battery to analyze the trace elements Zn, Al, Ti, Sn, Zr, Fe, and Li in the electrolyte solution.

Analyzing the content of elements in the electrolyte solution by inductively coupled plasma-optical emission spectrometry after completion of 50 cycles.

Charging the battery at a constant current of 0.5C in a 25 °C and normal-pressure (0.1 MPa) environment until the voltage reaches 4 V (for layered oxide positive electrode) 3.5 V (for sodium vanadium phosphate positive electrode), and then discharging the battery at a constant current of 1C until the voltage drops to 2.4 V (for layered oxide positive electrode) or 3.2 V (for sodium vanadium phosphate positive electrode), thereby completing one charge-discharge cycle.

### 2) Testing the amount of gas generated per cell

Placing a battery in a 60 °C thermostat to undergo chemical formation and storage. The specific high-temperature formation steps are as follows: Charging the battery at a constant current rate of 0.1C (2.4 mA) until the voltage reaches 4 V (for layered oxide positive electrode) or 3.5V (for sodium vanadium phosphate positive electrode), and then discharging the battery at a constant current rate of 0.1C until the voltage drops to 3.7 V (for layered oxide positive electrode) or 3.2 V (for sodium vanadium phosphate positive electrode), and then analyzing the amount of gas generated during storage. The specific steps of testing the amount of gas generated during high-temperature storage are as follows: Charging the battery at a constant current rate of 1C (24 mA) until the voltage reaches 3.5 V, and then storing the battery in a 60 °C thermostat for 20 days, and measuring the amount of gas generated by the battery cell.

### 3) Cycle capacity retention rate test

Charging the battery at a constant current of 0.5C in a 25 °C and normal-pressure (0.1 MPa) environment until the voltage reaches 4 V (for layered oxide positive electrode) 3.5 V (for sodium vanadium phosphate positive electrode), and then discharging the battery at a constant current of 1C until the voltage drops to 2.4 V (for layered oxide positive electrode) or 3.2 V (for sodium vanadium phosphate positive electrode), thereby completing one charge-discharge cycle. Assuming that the first-cycle discharge capacity is 100%. Repeating the charge-discharge cycles, and recording the cycle capacity retention rate at the end of 500 cycles.

### 4) Testing the interface impedance

Testing the interface impedance by using conventional electrochemical impedance spectroscopy. Applying voltage perturbation at an amplitude of 5 mV and a frequency of 100 kHz to 0.01 Hz, fitting the resultant Nyquist plot, and analyzing the plot using Zview software to obtain the interface impedance value.

### III. Analysis on the test results of embodiments and comparative embodiments

The batteries described in the embodiments and the comparative embodiments are prepared according to the foregoing methods respectively, and performance parameters of the batteries are measured. The test results are shown in Table 1 and Table 2 below.

**Table 1 (To be continued)**

| Serial number | ALD layer | | | | Current collector |
|---|---|---|---|---|---|
| | Type | Thickness (nm) | Young's modulus (GPa) | Negative electrode undercoat | Film resistance (Ω) |
| Embodiment 1 | Aluminum oxide | 5 | 3.71 | N/A | 3×10⁻⁴ |
| Embodiment 2 | Aluminum oxide | 10 | 3.98 | N/A | 3×10⁻⁴ |
| Embodiment 3 | Aluminum oxide | 30 | 5.73 | N/A | 6×10⁻⁴ |
| Embodiment 4 | Aluminum oxide | 50 | 6.09 | N/A | 1×10⁻³ |
| Embodiment 5 | Aluminum oxide | 5 | 3.71 | Carbon nanotube | 3×10⁻⁴ |
| Embodiment 6 | Titanium oxide | 5 | 10.21 | N/A | 1×10⁻³ |
| Embodiment 7 | Aluminum oxide | 5 | 3.71 | N/A | 3×10⁻⁴ |
| Embodiment 8 | Aluminum oxide | 5 | 3.71 | N/A | 3×10⁻⁴ |
| Embodiment 9 | Aluminum oxide | 5 | 3.71 | N/A | 3×10⁻⁴ |
| Embodiment 10 | Aluminum oxide | 5 | 3.71 | N/A | 3×10⁻⁴ |
| Comparative Embodiment 1 | / | / | / | N/A | 2×10⁻⁴ |
| Comparative Embodiment 2 | / | / | / | Carbon nanotube | 2×10⁻⁴ |
| Comparative Embodiment 3 | / | / | / | N/A | 2×10⁻⁴ |
| Comparative Embodiment 4 | / | / | / | N/A | 2×10⁻⁴ |

**Table 1 (Continued)**

| Serial number | Positive active material | Positive electrode capacity (mAh) | Thickness/theoretical capacity of positive active material (nm/mAh) |
|---|---|---|---|
| Embodiment 1 | Sodium vanadium phosphate | 24 | 0.21 |
| Embodiment 2 | Sodium vanadium phosphate | 24 | 0.42 |
| Embodiment 3 | Sodium vanadium phosphate | 24 | 1.25 |
| Embodiment 4 | Sodium vanadium phosphate | 24 | 2.08 |
| Embodiment 5 | Sodium vanadium phosphate | 24 | 0.21 |
| Embodiment 6 | Sodium vanadium phosphate | 24 | 0.21 |
| Embodiment 7 | Sodium vanadium phosphate | 15 | 0.33 |
| Embodiment 8 | Sodium vanadium phosphate | 40 | 0.13 |
| Embodiment 9 | NaNi_{0.33}Fe_{0.33}Mn_{0.34}O₂ | 24 | 0.21 |
| Embodiment 10 | NaNi_{0.33}Fe_{0.33}Mn_{0.34}O₂@C | 24 | 0.21 |
| Comparative Embodiment 1 | Sodium vanadium phosphate | 24 | / |
| Comparative Embodiment 2 | Sodium vanadium phosphate | 24 | / |
| Comparative Embodiment 3 | NaNi_{0.33}Fe_{0.33}Mn_{0.34}O₂ | 24 | / |
| Comparative Embodiment 4 | NaNi_{0.33}Fe_{0.33}Mn₀.₃₄O₂@C | 24 | / |

**Table 2**

| Serial number | Battery | | | |
|---|---|---|---|---|
| | Mass percent of specified element after 50 cycles (%) | Amount of gas generated per cell (mL) | Interface impedance (Ω) | Cycle capacity retention rate |
| Embodiment 1 | < 0.0001 | 0.2 | 0.63 | 93% |
| Embodiment 2 | < 0.0001 | 0.2 | 0.71 | 92% |
| Embodiment 3 | < 0.0001 | 0.2 | 2.13 | 85% |
| Embodiment 4 | < 0.0001 | 0.2 | 8.15 | 82% |
| Embodiment 5 | < 0.0001 | 0.2 | 0.63 | 95% |
| Embodiment 6 | < 0.0001 | 0.2 | 1.45 | 85% |
| Embodiment 7 | < 0.0001 | 0.1 | 0.63 | 95% |
| Embodiment 8 | < 0.0001 | 0.3 | 0.63 | 92% |
| Embodiment 9 | < 0.0001 | 0.7 | 1.42 | 82% |
| Embodiment 10 | < 0.0001 | 0.6 | 1.08 | 86% |
| Comparative Embodiment 1 | < 0.0001 | 0.8 | 0.51 | 86% |
| Comparative Embodiment 2 | < 0.0001 | 0.8 | 0.28 | 88% |
| Comparative Embodiment 3 | < 0.0001 | 1.5 | 1.21 | 65% |
| Comparative Embodiment 4 | < 0.0001 | 1.2 | 0.81 | 77% |

As can be seen from Table 1 and Table 2, the anode-free sodium battery in Embodiments 1 to 10 includes a current collector with a coating. The coating includes at least a surface modification layer. The coating is formed on at least one side of the current collector. The thickness of the surface modification layer is not greater than 50 nm.

As can be seen from Embodiments 1 to 4 and 6 versus Comparative Embodiment 1, Embodiment 5 versus Comparative Embodiment 2, and Embodiments 9 to 10 versus Comparative Embodiments 3 to 4, the current collector with a coating according to this application can significantly reduce the gassing amount of the battery and effectively improve the safety of the battery.

In contrast to Comparative Embodiment 1, the gassing amount of the battery in Embodiment 1 is reduced 4 times, and the capacity retention rate is more excellent. In contrast to Comparative Embodiment 1, the gassing amount of the battery in Embodiment 2 is reduced 4 times, and the cycle capacity retention rate is more excellent.

In contrast to Comparative Embodiment 2, the gassing amount of the battery in Embodiment 5 is reduced 4 times, and the cycle capacity retention rate is more excellent. In contrast to Comparative Embodiment 3, the gassing amount of the battery in Embodiment 9 is reduced 2 times, and the cycle capacity retention rate is more excellent. In contrast to Comparative Embodiment 4, the gassing amount of the battery in Embodiment 10 is reduced 2 times, and the cycle capacity retention rate is more excellent.

As can be seen from Embodiments 1 to 4, when the thickness of the surface modification layer of the current collector is not greater than 10 nm, the gassing amount of the anode-free sodium secondary battery is reduced, the interface impedance is further reduced, and the cycle capacity retention rate is more excellent.

As can be seen from Embodiment 5 versus Embodiment 1, the undercoat of the negative current collector can further improve the cycle capacity retention rate of the anode-free sodium battery.

As can be seen from Embodiments 1 to 4, when the Young's modulus of the surface modification layer is 0.5 to 4 GPa, the cycle capacity retention rate of the anode-free sodium battery is even more excellent.

As can be seen from Embodiments 1 to 4 and 6 versus Comparative Embodiment 1, all the surface modification layers disclosed herein and containing diverse compounds can significantly reduce the gassing amount of the battery and effectively improve the safety of the battery.

As can be seen from Embodiment 1 versus Comparative Embodiment 1, and Embodiments 9 to 10 versus Comparative Embodiments 3 to 4, for different positive electrode materials, regardless whether the positive electrode material is a polyanionic oxide or a layered oxide, the anode-free sodium battery of this application shows a smaller gassing amount and more excellent cycle capacity retention rate. Especially, for the layered oxide, the current collector with a coating according to this application can significantly improve the cycle performance of the battery at high voltage.

It is hereby noted that this application is not limited to the foregoing embodiments. The foregoing embodiments are merely examples. Any and all embodiments with substantively the same constituents or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

## Claims

1. A current collector with a coating, **characterized in that** the coating comprises at least a surface modification layer, the coating is located on at least one side of the current collector, and a thickness of the surface modification layer is not greater than 50 nm.

2. The current collector according to claim 1, **characterized in that** the thickness of the surface modification layer is not greater than 10 nm.

3. The current collector according to claim 1 or 2, **characterized in that** a Young's modulus of the surface modification layer is 0.1 GPa to 100 GPa, and optionally 0.5 GPa to 4 GPa.

4. The current collector according to any one of claims 1 to 3, **characterized in that** the surface modification layer comprises one or more of zinc oxide, aluminum oxide, titanium oxide, tin oxide, zirconium oxide, aluminum phosphate, iron phosphate, or lithium phosphate.

5. The current collector according to any one of claims 1 to 4, **characterized in that** a film resistance of the current collector with the coating is 2×10⁻⁴ to 2×10⁻² Ω, and optionally 3×10⁻⁴ to 5×10⁻³ Ω.

6. The current collector according to any one of claims 1 to 5, **characterized in that** the surface modification layer is prepared by atomic layer deposition.

7. The current collector according to any one of claims 1 to 6, **characterized in that** the surface modification layer is in direct contact with a surface of the current collector.

8. The current collector according to any one of claims 1 to 7, **characterized in that** the coating further comprises a deposition-inducing layer, and the deposition-inducing layer and the surface modification layer are sequentially arranged in a direction directed away from the current collector.

9. The current collector according to claim 8, **characterized in that** the deposition-inducing layer comprises a carbon material.

10. The current collector according to any one of claims 1 to 9, **characterized in that** the current collector comprises at least one of metal foil, a metal foam current collector, or a metal mesh current collector.

11. A secondary battery, **characterized in that** the secondary battery comprises a negative electrode plate, and the negative electrode plate comprises the current collector according to any one of claims 1 to 10.

12. The secondary battery according to claim 11, **characterized in that** the secondary battery is a sodium secondary battery.

13. The secondary battery according to claim 11 or 12, **characterized in that** the secondary battery is an anode-free sodium secondary battery.

14. The secondary battery according to any one of claims 11 to 13, **characterized in that** a thickness of the surface modification layer per unit capacity is 0.1 to 5 nm/mAh.

15. The secondary battery according to any one of claims 11 to 14, **characterized in that** the secondary battery further comprises an electrolyte solution, the electrolyte solution comprises a sodium salt, and the sodium salt comprises one or more of sodium perchlorate, sodium tetrafluoroborate, sodium hexafluorophosphate, sodium hexafluoroarsenate, sodium trifluoroacetate, sodium tetraphenylborate, sodium trifluoromethanesulfonate, sodium bis(fluorosulfonyl)imide, or sodium bis(trifluoromethanesulfonyl)imide.

16. The secondary battery according to claim 15, **characterized in that**, after 50 charge-discharge cycles, based on a mass of the electrolyte solution, an aggregate mass percent of elements Zn, Al, Ti, Sn, Zr, Fe, and Li in the electrolyte solution is less than 0.0001%.

17. An electrical device, **characterized in that** the electrical device comprises the secondary battery according to any one of claims 11 to 16.
